Europäisches Patentamt

European Patent Office

Office européen des brevets

(11) Publication number : **0 490 296 B1**

(12) **EUROPEAN PATENT SPECIFICATION**

(45) Date of publication of patent specification :
25.05.94 Bulletin 94/21

(51) Int. Cl.⁵ : **A23L 1/311, A23L 1/314**

(21) Application number : **91120990.6**

(22) Date of filing : **06.12.91**

(54) **Meat and fish garnishes for soups.**

(30) Priority : **07.12.90 DE 4039130**

(43) Date of publication of application :
**17.06.92 Bulletin 92/25**

(45) Publication of the grant of the patent :
**25.05.94 Bulletin 94/21**

(84) Designated Contracting States :
**AT BE CH DE DK ES FR GB GR IT LI LU NL SE**

(56) References cited :
**DE-A- 2 045 988**
**GB-A- 2 090 515**
**PATENT ABSTRACTS OF JAPAN vol. 4, no. 81**
**(C-14)11 June 1980 & JP-A-55 045 374 (**
**HAYAKAWA TETSUO ) 31 March 1980**
**PATENT ABSTRACTS OF JAPAN vol. 12, no.**
**349 (C-529)20 September 1988 & JP-A-63 105**
**643 ( TOSHIYUKI OOTA ) 10 May 1988**

(73) Proprietor : **CPC INTERNATIONAL INC.**
**International Plaza**
**P.O. Box 8000**
**Englewood Cliffs New Jersey 07632 (US)**

(72) Inventor : **Bohrmann, Hans, Dr.**
**Mörikeweg 8**
**W-7129 Talheim (DE)**
Inventor : **Schmid, Hermann, Dr.**
**Merowingerstrasse 15**
**W-7129 Talheim (DE)**
Inventor : **Thimig, Jürgen**
**Flürlenstrasse 4**
**W-7102 Weinsberg (DE)**

(74) Representative : **Lederer, Franz, Dr. et al**
**Lederer, Keller & Riederer**
**Patentanwälte**
**Prinzregentenstrasse 16**
**D-80538 München (DE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 490 296 B1

## Description

The present invention relates to dried meat and fish garnishes for soups, particularly dried soups and preferably thickened or cream soups. Such meat and fish garnishes are also known as soup dumplings.

Such garnishes contained in dried soups, e.g., as soup dumplings with a value-determining amount of meat or fish, have, in rehydrated form, very little in common with freshly produced meat or fish dumplings. This is partly due to the production process and partly due to the raw materials.

For the production of conventional meat or fish dumplings the meat or fish starting material is cooked, cooled and then comminuted. The comminuted meat or fish is held together by various means, such as egg whites, lactoproteins, or thickening agents from marine algae or other plants. The addition of so-called loosening agents, such as semolina, wheat flour, oat flakes or bread crumbs, support the drying process and make rehydration of the soup dumplings possible, prior to consumption. For economic reasons, the preferred drying methods applied are hot-air or vacuum drying. In very few cases, freeze drying is used. The taste of soup dumplings produced by this process is dominated by the taste of the base raw materials and the taste of the loosening agents. The condiments added can barely change this taste. The texture is coarse-grained and gritty, and the mouthfeel feel is unsatisfactory. Rehydration is relatively good in clear soups, but insufficient in thickened or cream soups.

GB-PS 1 310 348 discloses that it is difficult to produce dried meat products which quickly rehydrate and have a good texture. Since only raw meat has a binding force of its own, contrary to boiled meat, it is recommended to incorporate raw meat for the production of cooked meat products. In order to improve the drying and the rehydration processes, some vegetable material is added to the comminuted meat mass, such as dried potato flakes, potato granulates, potato powder, or potato flour, although the latter is least preferred. Coarsely comminuted rice, barley or semolina or apple pieces may also be added to the mass. The cellular structure of the vegetable material must be retained in any case, since it is responsible for the porous structure of the dried meat products, which facilitates rehydration. Drying of the blanched meat products is conducted by use of hot air at a temperature of from about 50 to about 95°C.

The disadvantage of meat dumplings produced in this manner is the taste of the loosening agents, which masks the taste of the meat. In addition, the meat dumplings do not rehydrate satisfactorily in thickened or cream soups. The use of hot air for drying meat dumplings instead of freeze drying has a negative effect on the consistency and texture of the meat products after being rehydrated.

GB-PS 1 168 693 describes the production of foamed, dried meat products by microwave drying comminuted meat material, to which extenders such as solid milk particles and flour may be added. The meat material may be a meat emulsion of the type similar to a boiling sausage meat stock. These products, to which no loosening agent is added, are difficult to dry completely and do not exhibit the desired light and fluffy texture after being rehydrated.

Boiling sausage meat stock is preferably used for the meat garnishes according to the present invention. Boiling sausages are defined as sausages that are heat-treated by means of boiling, baking, roasting or the like, in which comminuted raw meat is disintegrated either completely or partially with table salt, nitrite curing salt, or with other curing salts, usually in the presence of water. The muscle protein of the raw meat which is coagulated more or less coherently in the heat treatment, so that the products remain solid even in the event of being further subjected to heating. The amount of water used varies from sausage to sausage. Depending upon the type and quantity of meat and fat in the particular sausage, up to 10% blood plasma or blood serum is substituted for the water. It is also possible to include up to 5% milk as a replacement for the water. "Meat emulsion (meat batter)" is understood to be the raw meat which has been comminuted in the presence of water and salts, and then the raw meat mixture is used as the filling for boiling sausages.

A fish stuffing is used for the production of fish garnishes in accordance with the present invention. A fish stuffing is understood to be comminuted raw fish, which may be combined with eggs, cream, butter, small amount of loosening agents or combinations thereof.

By using raw boiling sausage meat emulsion (meat batter), fish stuffing or combinations thereof, the soup dumplings produced in accordance with the invention do not taste of boiled meat, or boiled fish, which would be the case if pre-cooked meat or fish were used. Due to the use of a boiling sausage meat emulsion (meat batter) fish stuffing or combinations thereof, produced in a grinding or fine-mincing machine, the base mixture is comprised of a very smooth, fine texture having an excellent mouthfeel. Boiling sausage meat emulsion (meat batter) and fish stuffing have excellent binding properties as such and thus do not require the addition of binding agents as in conventional soup dumplings. Without the addition of a loosening agent, however, they are very difficult to dry, and exhibit an insufficient rehydration ability. The addition of conventional loosening agents such as bread crumbs or grain products, however, has an effect on the taste of the resulting soup dumplings.

2

EP 0 490 296 B1

It has been unexpectedly found that cream puff paste as a loosening agent does not exhibit the above described negative properties. Cream puff paste is understood to be a mixture consisting of a narrowly defined range of fat, flour, egg and water or milk, wherein the liquid is "burned off". In bakeries and pastry shops, cream puff paste is used for the production of cream puffs, eclairs and similar pastries. Due to the "burning off", the taste of flour disappears completely, so that dried soup dumplings produced in this manner do not exhibit the flavor of conventional loosening agents after rehydration.

Thus, the subject matter of the present invention relates to meat and fish garnishes in dried form for soups, e.g., in the form of rehydratable soup dumplings for rehydratable soups, comprising a meat mass, fish mass or combinations thereof, and further comprising loosening agents, spices and other common additives, wherein the loosening agent is a cream puff paste.

Due to the addition of the cream puff paste to the soup dumplings in accordance with the present invention, the dumplings obtain a very fine, porous structure, which has a positive effect on the rehydration time. Another advantage of the soup dumplings of the present invention is the very fine, smooth texture after rehydration, with excellent mouthfeel as opposed to the coarse-grained, gritty texture of conventional soup dumplings. Another decisive advantage is the fact that the soup dumplings according to the present invention, also rehydrate well in thickened or creamed soups. Generally speaking, dumplings of from about 1 to about 2 cm in diameter rehydrate within about 5 to about 10 minutes.

Cream puff paste is added in an amount of from 10 to 25% by weight, preferably from 15 to 20% by weight, relative to the mixture prior to drying. The higher the amount added, the greater the effect on the characteristic consistency (too fluffy, too soft), whereas the lower additions prolong the rehydration time.

The garnishes produced in accordance with the present invention can be dried in any conventional manner, e.g., by air drying or freeze drying, with freeze drying being the preferred method. In general, drying is effected to an $a_w$-value of below about 0.5, preferably below about 0.3 and, in particular, about 0.25. The meat and fish garnishes according to the invention are particularly advantageous if they are used for thickened or cream soups, particularly dried cream soups. As compared with dried garnishes containing conventional loosening agents, the dumplings prepared in accordance with the present invention rehydrate better and quicker in cream soups.

The following examples are meant as illustrations. All percentages are by wirhgt unless otherwise noted.

Example 1

The following table shows the rehydration behavior in clear and thickened soups of veal dumplings containing different loosening agents. Veal stock was produced comprising 39.1% meagre veal, 39.1% substantial pork belly, 19.6% ice, 1.8% table salt and 0.4% spices. The following was added to this base meat stock: I. 20% mass of cream puff paste 1; II. 20% mass of cream puff paste 2; III. 10% conventional Roux; IV. 10% semolina; V. 10% bread crumbs. Each mass was formed into dumplings of about 1.5 cm in diameter, blanched for 5 minutes at 80°C and then freeze-dried.

## Table I

### Rehydration Time

| | In clear soups | In thickened soups |
|---|---|---|
| I. | 3 min. | 5 min. |
| II. | 3 min. | 5 min. |
| III. | 8 min. | after 10 min. still solid core |
| IV. | 6 min. | after 10 min. still solid core |
| V. | 8 min. | after 10 min. still solid core |

Below there are given various recipes for cream puff paste masses which are suitable for use in accordance with the present invention.

3

## Recipe 1

36.4% milk or water
9.0% butter
18.2% wheat flour
36.4% whole egg
The milk or water and the butter are brought to a boil in an uncovered pot, the wheat flour is then added all at once and "burned off", constantly stirring. One egg after another is now mixed in the burned-off mass, thus producing a completely smooth cream puff paste.

## Recipe 2

40.8% water
8.2% vegetable oil
20.4% wheat flour
30.6% whole egg
The process is the same as set forth in recipe 1.

## Example 1 (Meat Dumplings)

32% veal (raw)
32% bacon
16% ice
1.6% table salt
0.4% spices
18% cream puff paste
The veal and bacon were minced together. A fine, homogeneous raw meat stock was produced by mixing the veal, bacon, ice, salt and spices in a grinder or mixer. Thereafter, the cream puff paste was added thereto.
The mixture was dried by freeze drying to an $a_w$-value of less than 0.25.

## Example 2 (Fish dumplings)

45% fish filet (raw)
35% cream
1.4% table salt
0.2% spices
18.4% cream puff paste
The fish was minced and placed into a grinder. The mass was finely ground with the addition of the salt, spices and cream, in which the final temperature did not exceed 10°C. Then the mass of cream puff paste was added to the grinder.
The mixture was dried by freeze drying to an $a_w$-value of less than 0.25.

## Claims

1.  Rehydratable meat and fish garnishes comprising loosening agents, spices and other common additives, wherein the loosening agents are at least partly comprised of a cream puff paste.

2.  Meat garnishes according to claim 1, wherein the meat mass is a boiling sausage meat emulsion (meat batter).

3.  Fish garnishes according to claim 1, wherein the fish mass is a fish stuffing.

4.  Meat and fish garnishes according to one of the previous claims, characterized in that they are available in the form of dried soup dumplings.

5.  Meat and fish garnishes of claim 1, wherein the cream puff paste is present in an amount of from 10 to 25% by weight, of the not yet dried mass.

6. Meat and fish garnishes of claim 1, wherein the cream puff paste is present in an amount of from 15 to 20% by weight of the not yet dried mass.

7. Use of the meat and fish garnishes according to one of claims 1-6 in thickened soups, cream soups, in particular dried cream soups.


**Patentansprüche**

1. Fleisch- und Fischeinlagen in getrockneter Form umfassend Lockerungsmittel, Gewürze und andere übliche Zusätze, wobei die Lockerungsmittel zumindest teilweise aus einem Brandteig bestehen.

2. Fleischeinlagen nach Anspruch 1, wobei die Fleischmasse ein Brühwurstbrät ist.

3. Fischeinlage nach Anspruch 1, wobei die Fischmasse eine Fischfarce ist.

4. Fleisch- und Fischeinlagen nach einem der vorhergehenden Ansprüche, dadurch gekennzeichnet, daß sie in Form von getrockneten Suppenklößchen vorliegen.

5. Fleisch- und Fischeinlagen nach Anspruch 1, wobei der Brandteig in einer Menge von 10 bis 25 Gewichts-% in der noch nicht getrockneten Masse vorliegt.

6. Fleisch- und Fischeinlagen nach Anspruch 1, wobei der Brandteig in einer Menge von 15 bis 20 Gewichts-% in der noch nicht getrockneten Masse vorliegt.

7. Verwendung der Fleisch- und Fischeinlagen nach einem der Ansprüche 1 bis 6 in gebundenen Suppen, Cremesuppen, insbesondere Trockencremesuppen.


**Revendications**

1. Garnitures réhydratables à la viande et au poisson, comprenant des agents de délitement, des épices et d'autres additifs usuels, dans lesquelles les agents de délitement sont constitués au moins partiellement d'une pâte pour choux à la crème.

2. Garnitures à la viande suivant la revendication 1, dans lesquelles la masse de viande est une émulsion de viande (pâte de viande) pour saucisses à cuire.

3. Garnitures au poisson suivant la revendication 1, dans lesquelles la masse de poisson est une matière de bourrage à base de poisson.

4. Garnitures à la viande et garnitures au poisson suivant une des revendications précédentes, caractérisées en ce qu'elles sont disponibles sous forme de boulettes d'accompagnement déshydratées pour soupes.

5. Garnitures à la viande et garnitures au poisson suivant la revendication 1, dans lesquelles la pâte pour choux à la crème est présente en une quantité de 10 à 25 % en poids de la masse non encore déshydratée.

6. Garnitures à la viande et garnitures au poisson suivant la revendication 1, dans lesquelles la pâte pour choux à la crème est présente en une quantité de 15 à 20 % en poids de la masse non encore déshydratée.

7. Utilisation des garnitures à la viande et des garnitures au poisson suivant une des revendications 1 à 6 dans des soupes épaissies, des soupes à consistance de crème, en particulier des crèmes déshydratées pour soupes.